# EUROPÄISCHE PATENTSCHRIFT

(11) **EP 1 780 354 B1**
(45) Veröffentlichungstag und Bekanntmachung des Hinweises auf die Patenterteilung: **30.12.2009**
(21) Anmeldenummer: 06021394.9
(22) Anmeldetag: 12.10.2006
(51) Int. Cl.: E05B 65/08, E05C 17/60, E05D 13/00, B60J 5/06

(54) **Schiebetüranordnung für ein Kraftfahrzeug**
Sliding door arrangement for vehicle
Agencement d'une porte coulissante de véhicule automobile

(30) Priorität: 28.10.2005 DE 202005017077 U
(43) Veröffentlichungstag der Anmeldung: 02.05.2007
(73) Patentinhaber: Brose Schliesssysteme GmbH & Co. KG, 42369 Wuppertal (DE)
(72) Erfinder: Kothe, Markus, 42553 Velbert (DE); Hörschgen, Frank, 42657 Solingen (DE)
(74) Vertreter: Gesthuysen, von Rohr & Eggert

(56) Entgegenhaltungen:
- EP-A1- 0 726 376
- EP-A1- 0 800 944
- EP-A2- 0 791 709
- DE-A1- 3 310 961
- GB-A- 2 210 339
- US-A- 3 198 564
- US-A- 4 662 109
- US-A- 5 141 266
- US-A- 5 221 115
- US-A1- 2006 202 507
- US-B1- 6 412 222

## Beschreibung

Die vorliegende Erfindung betrifft eine Schiebetüranordnung für ein Kraftfahrzeug gemäß dem Oberbegriff von Anspruch 1 sowie eine Schloßanordnung gemäß dem Oberbegriff von Anspruch 12.

Vorliegend sind unter dem Begriff "Schiebetüranordnung" alle Komponenten zusammengefaßt, die für die Funktionalität einer Schiebetür notwendig sind. Dazu gehören neben der Schiebetür selbst auch der entsprechende in der Kraftfahrzeugkarosserie vorgesehene Rahmen, Führungsschienen etc.

Schiebetüren werden seit langem für Lieferwagen und Kleintransporter, in jüngerer Zeit zunehmend auch für Personenwagen eingesetzt. Allen Schiebetüren ist gemeinsam, daß sie durch eine Schiebebewegung in eine geöffnete Stellung und in eine geschlossene Stellung verstellbar sind. Diese Schiebebewegung erfolgt im wesentlichen parallel zur Seitenwand des Kraftfahrzeugs. Besonders vorteilhaft ist dabei die Tatsache, daß ein ungestörtes Be- und Entladen bzw. Ein- und Aussteigen möglich ist. Vor diesem Hintergrund gewinnt die Betriebssicherheit, insbesondere die sichere Fixierung der Schiebetür in der geschlossenen Stellung immer mehr an Bedeutung, wobei die Erhöhung der Betriebssicherheit möglichst nicht mit einer Erhöhung der Kosten verbunden sein soll. Gleichzeitig steigen die Anforderungen an den Benutzungskomfort.

Eine bekannte Schiebetüranordnung (DE 33 10 961 A1) zeigt einen vergleichsweise hohen Benutzungskomfort. Hier ist eine übliche Schloßanordnung zur Fixierung der Schiebetür in der geschlossenen Stellung vorgesehen. Für die Fixierung der Schiebetür in der geöffneten Stellung ist die Schloßanordnung mit einer Klinkenanordnung ausgestattet, die eine schwenkbare Klinke mit einer hakenartigen Ausformung aufweist. Bei in der geöffneten Stellung stehender Schiebetür läßt sich die Klinke, insbesondere die hakenartige Ausformung der Klinke, in Eingriff mit einem an der Karosserie des Kraftfahrzeugs angeordneten Eingriffselement in Eingriff bringen, wobei die Schiebetür durch die im eingefallenen Zustand befindliche Klinke in der geöffneten Stellung fixiert wird. Durch eine manuelle Betätigung des Benutzers läßt sich die Klinke in einen ausgehobenen Zustand bringen, so daß die Schiebtür wieder in Richtung ihrer geschlossenen Stellung verstellbar ist. Eine solche Fixierung der Schiebetür in der geöffneten Stellung ist insbesondere dann vorteilhaft, wenn das Kraftfahrzeug an einer Steigung steht und die Schiebtür ohne weitere Fixierung durch ihre Gewichtskraft selbsttätig in die geschlossene Stellung fallen würde. Nachteilig bei der bekannten Schiebetüranordnung ist allerdings die Tatsache, daß die Fixierung der Schiebetür im geschlossenen Zustand in bestimmten Fällen nicht ausreichend ist. Ein Beispiel hierfür ist eine Seitenaufprall im Crashfall, bei dem die Schiebetür dort, wo die Schloßanordnung nicht angreift, lediglich in Führungsschienen o. dgl. geführt ist und leicht ausreißen kann.

Eine andere bekannte Schiebetür (US 4,662,109 A) zeigt eine hohe Betriebssicherheit auch im Crashfall, da in Längsrichtung des Kraftfahrzeugs gesehen sowohl im vorderen Bereich als auch im hinteren Bereich der Schiebetür ein Schloß der Schloßanordnung vorgesehen ist. Hierdurch wird das oben beschriebene Ausreißen der Schiebetür im Crashfall wirksam verhindert. Eine Fixierung der Schiebetür in der geöffneten Stellung ist allerdings nicht realisiert. Insgesamt handelt es sich bei dieser Schiebetüranordnung überdies um eine sehr aufwendige Konstruktion.

Eine Vereinfachung der Konstruktion einer Sehiebetüranordnung, die auch die Funktion der Fixierung der Schiebetür in der geöffneten Stellung aufweist, zeigt die GB 2 210 339 A. Hier ist vorgesehen, die Funktion der Fixierung der Schiebetür in der geschlossenen Stellung mit der Funktion der Fixierung der Schiebetür in der geöffnete Stellung zusammenzulegen, also das hierfür vorgesehene Schloß doppelt zu nutzen. Eine konstruktive Realisierung wird allerdings nicht vorgeschlagen.

Eine mögliche konstruktive Umsetzung für die zuvor angesprochene Doppelnutzung eines Schlosses wird in der US 3,198,564 gegeben. Von diesem Stand der Technik geht die Erfindung aus. Hier ist eine als Drehfalle ausgebildete Schloßfalle vorgesehen, die mit einer Sperrklinkenanordnung zusammenwirkt. Die Drehfalle weist ein erstes Einlaufmaul für den Eingriff mit einem ersten Eingriffselement und ein zweites Einlaufmaul für den Eingriff mit einem zweiten Eingriffselement auf. Die beiden Eingriffselemente sind an gegenüberliegenden Seiten der zu verschließenden Öffnung der Karosserie des Kraftfahrzeugs angeordnet, so daß eine Fixierung der Schiebetür sowohl in der geöffneten Stellung als auch in der geschlossenen Stellung möglich ist. Durch die Notwendigkeit der Existenz einer Sperrklinkenanordnung ist diese Lösung wiederum konstruktiv aufwendig.

Der Erfindung liegt das Problem zugrunde, die zuvor genannte bekannte Schiebetüranordnung derart auszugestalten und weiterzubilden, daß eine hohe Crashsicherheit einerseits und ein hoher Benutzungskomfort andererseits bei kompaktem und gleichzeitig kostengünstigem Aufbau möglich ist.

Das obige Problem wird bei einer Schiebetüranordnung mit den Merkmalen des Oberbegriffs von Anspruch 1 durch die Merkmale des kennzeichnenden Teils von Anspruch 1 gelöst.

Wesentlich ist zunächst die grundsätzliche Überlegung, daß eine einfache Klinke sowohl für die Fixierung der Schiebetür in der geöffneten Stellung als auch für die Fixierung der Schiebetür in der geschlossenen Stellung Anwendung finden kann. Dabei ist vorgesehen, daß dieselbe Klinke beide Funktionen übernimmt.

Es ist hier weiter erkannt worden, daß die beiden oben genannten Funktionen nicht gleichwertig sind. Die Fixierung der Schiebtür in der geöffneten Stellung ist eine reine Komfortfunktion, die die Betriebssicherheit kaum beeinflußt. Ferner sind die hier notwendigen Haltekräfte gering.

Anders ist es bei der Funktion der Fixierung der Schiebetür in der geschlossenen Stellung. Hier sind die Dichtungsgegendrücke erheblich, ganz zu schweigen von den im Crashfall möglicherweise auftretenden Kräfte. Ferner ist diese Funktion im Hinblick auf die Betriebssicherheit der Schiebetüranordnung von besonders großer Bedeutung, so daß hier eine maximale Zuverlässigkeit notwendig ist.

Im Hinblick auf die unterschiedliche "Qualität" der beiden oben genannten Funktionen ist vorschlagsgemäß vorgesehen, daß die Vorspannung der Klinke in Richtung des eingefallenen Zustandes durch die Verstellung der Schiebetür in die geschlossene Stellung ansteigt. Dies bedeutet zunächst, daß die Vorspannung der Klinke bei in der geöffneten Stellung befindlichen Schiebetür minimal ist.

Dies führt dazu, daß die Klinke mit minimaler Kraft ausgehoben werden kann. Im Falle der manuellen Betätigung bedeutet dieses wiederum einen hohen Benutzungskomfort.

Bei in der geschlossenen Stellung stehender Schiebetür ist die Vorspannung der Klinke hingegen maximal. Dies bedeutet, daß die Klinke mit hoher Vorspannung in den eingefallenen Zustand gedrückt wird. Im Crashfall bedeutet dies, daß ein durch die dortigen Beschleunigungslrräfte bewirktes, ungewünschtes Ausheben der Klinke vermieden wird. Durch die erhöhte Vorspannung der Klinke wird die Crashsicherheit erhöht.

Ursächlich für den Anstieg der Vorspannung ist also die Verstellbewegung der Schiebetür in die geschlossene Stellung. Dies bedeutet aber auch, daß die Verstellung der Schiebetür in die geschlossene Stellung mit einem erhöhten Kraftaufwand verbunden ist. Dies wiederum bedeutet, daß beim Öffnen der Schiebetür eine entsprechende in Öffnungsrichtung wirkende Kraft zur Verfügung steht. Diese kann grundsätzlich für die Unterstützung des Öffnungsvorgangs genutzt werden.

Die Realisierung des Anstiegs der Vorspannung der Klinke durch die Verstellung der Schiebetür in die geschlossene Stellung kann auf zahlreiche Arten erfolgen. Beispielsweise ist ein linearer Anstieg denkbar. Besonders vorteilhaft ist jedoch die Ausgestaltung gemäß einer Variante von Anspruch 4, bei der das Verschwenken des Rollenwagens gegenüber der Schiebetür im übrigen bzw. deren Trägerbauteil genutzt wird, um ein Federelement zu spannen. Hier ist es so, daß die Erhöhung der Vorspannung der Klinke primär im letzten Bewegungsabschnitt der Schließbewegung erfolgt.

Nach Anspruch 6 ist erkannt worden, daß die konstruktive Ausgestaltung der Klinke dann besonders einfach ist, wenn die Klinke für die Fixierung der Schiebetür in der einen Stellung der Schiebetür als Hakenklinke und in der anderen Stellung der Schiebetür als Stützklinke arbeitet. Dies bedeutet, daß die Klinke einerseits auf Zug und andererseits auf Druck belastet wird. Damit kann es, wie bei der bevorzugten Ausgestaltung gemäß Anspruch 8, ohne weiteres vorgesehen werden, daß eine hakenartige Ausformung für den Betrieb als Hakenklinke und ein Stützabschnitt für den Betrieb als Stützklinke an einem Arm der Klinke angeordnet sind. Dies führt zu einer besonders kompakten und gleichzeitig robusten Ausgestaltung der Klinke.

Nach einer weiteren Lehre, der ebenfalls eigenständige Bedeutung zukommt, ist die Schloßanordnung mit den üblichen Schließelementen Schloßfalle und Sperrklinke ausgestattet, die jedenfalls für die Fixierung der Schiebetür in der geschlossenen Stellung sorgen.

Bei den oben beschriebenen Schiebetüranordnungen ist vorzugsweise vorgesehen, daß die Schloßanordnung eine Hauptschloßanordnung, durch die die Schiebetür in der geschlossenen Stellung fixierbar ist, und eine Zusatzschloßanordnung zur Unterstützung der Hauptschloßanordnung aufweist. Dabei sind die oben beschriebenen Klinkenanordnungen und die oben beschriebene Fallenanordnung mit Schloßfalle und Sperrklinke vorzugsweise der Zusatzschloßanordnung zugeordnet. Eine besonders hohe Crashsicherheit läßt sich dadurch erreichen, daß die Hauptschloßanordnung einerseits und die Zusatzschloßanordnung andererseits in Längsrichtung des Kraftfahrzeugs gesehen an gegenüberliegenden Bereichen der Schiebetür angeordnet sind. Die Hauptschloßanordnung weist hier wiederum vorzugsweise die Schließelemente Schloßfalle und Sperrklinke auf.

Weitere Einzelheiten, Merkmale und Vorteile der vorliegenden Erfindung werden nachfolgend anhand der Zeichnung eines bevorzugten Ausführungsbeispiels näher erläutert. In der Zeichnung zeigt
- Fig. 1: in schematischer Darstellung ein Kraftfahrzeug mit der erfindungsgemäßen Schiebetüranordnung,
- Fig. 2: die wesentlichen Komponenten der Schiebetüranordnung gemäß Fig. 1 bei in der geschlossenen Stellung stehenden Schiebetür in einer Schnittansicht gemäß Linie II-II in Fig. 1,
- Fig. 3: die Darstellung gemäß Fig. 2 bei in der geschlossenen Stellung stehenden Schiebetür und bei im ausgehobenen Zustand befindlicher Klinke,
- Fig. 4: die Darstellung gemäß Fig. 2 bei in der geöffneten Stellung stehenden Schiebetür und bei im eingefallenen Zustand befindlicher Klinke,
- Fig. 5: eine ausschnittsweise perspektivische Darstellung der Schiebetüranordnung gemäß Fig. 1 bei in der geöffneten Stellung stehenden Schiebetür,
- Fig. 6: die wesentlichen Komponenten einer weiteren erfindungsgemäßen Schiebetüranordnung in einer Fig. 4 entsprechenden Darstellung.

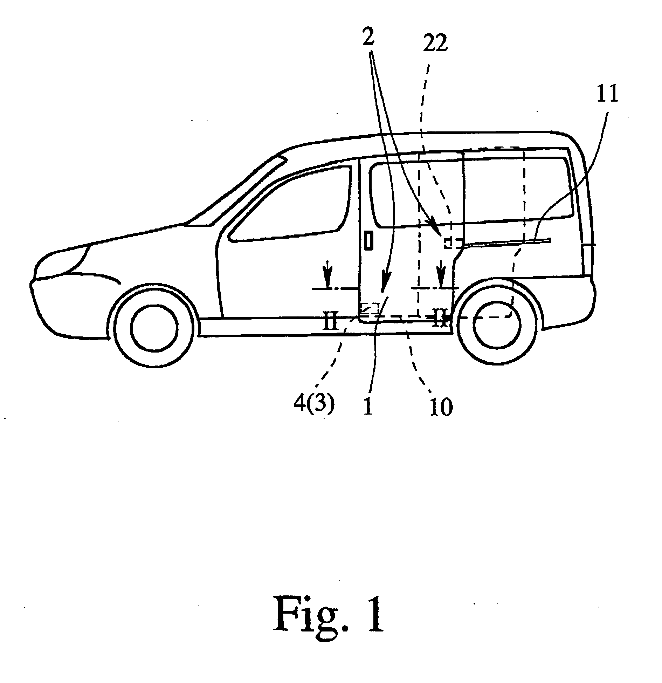

In der Zeichnung zeigt Fig. 1 ein Kraftfahrzeug mit einer Schiebetüranordnung, die seitlich des Kraftfahrzeugs angeordnet ist. Gleichermaßen ist es auch denkbar, daß sich die Schiebetüranordnung an der Rückseite des Kraftfahrzeugs befindet. Die Schiebetüranordnung weist eine Schiebetür 1 auf, die durch eine Schiebebewegung in eine geöffnete Stellung (in Fig. 1 in gestrichelter Linie dargestellt) und in eine geschlossene Stellung (in Fig. 1 in durchgezogener Linie dargestellt) verstellbar ist. Die Ausgestaltung der Führung der Schiebetür 1 wird weiter unten noch näher erläutert.

Zur Fixierung der Schiebetür 1 in der geöffneten Stellung einerseits und in der geschlossenen Stellung andererseits ist eine Schloßanordnung 2 vorgesehen. Grundsätzlich kann die Schloßanordnung 2 auch dazu dienen, die Schiebetür 1 in einer Zwischenstellung zu fixieren.

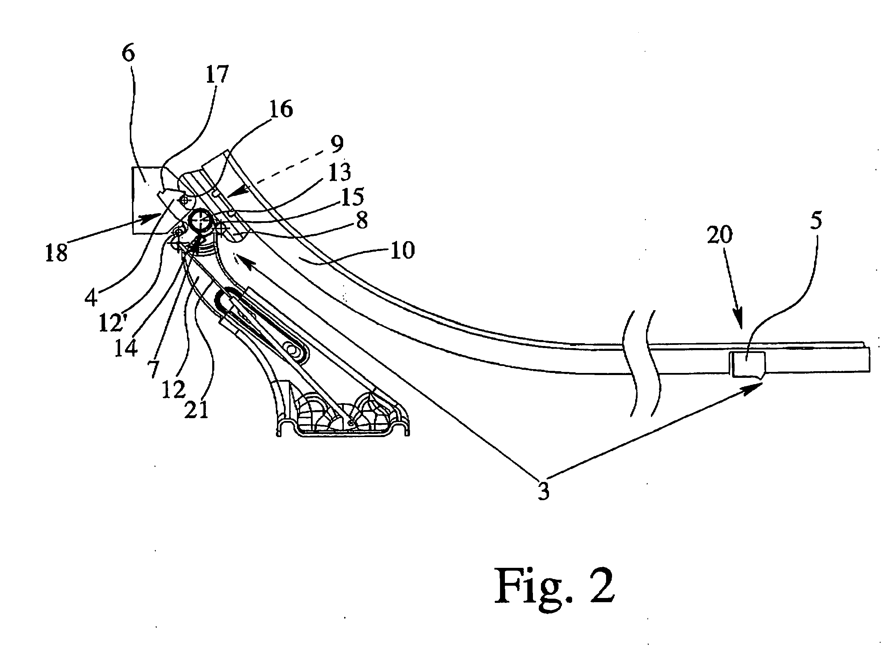

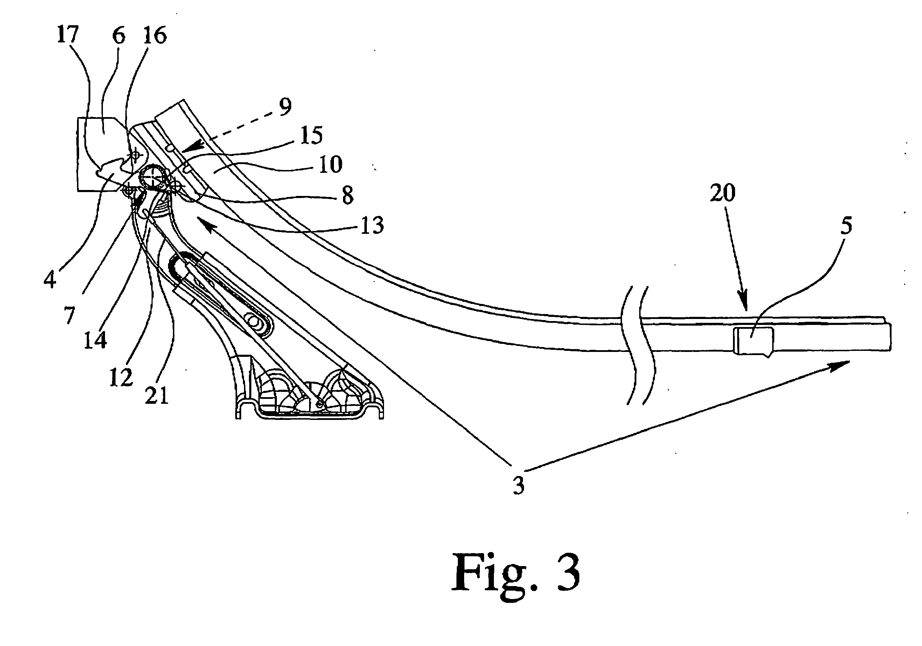

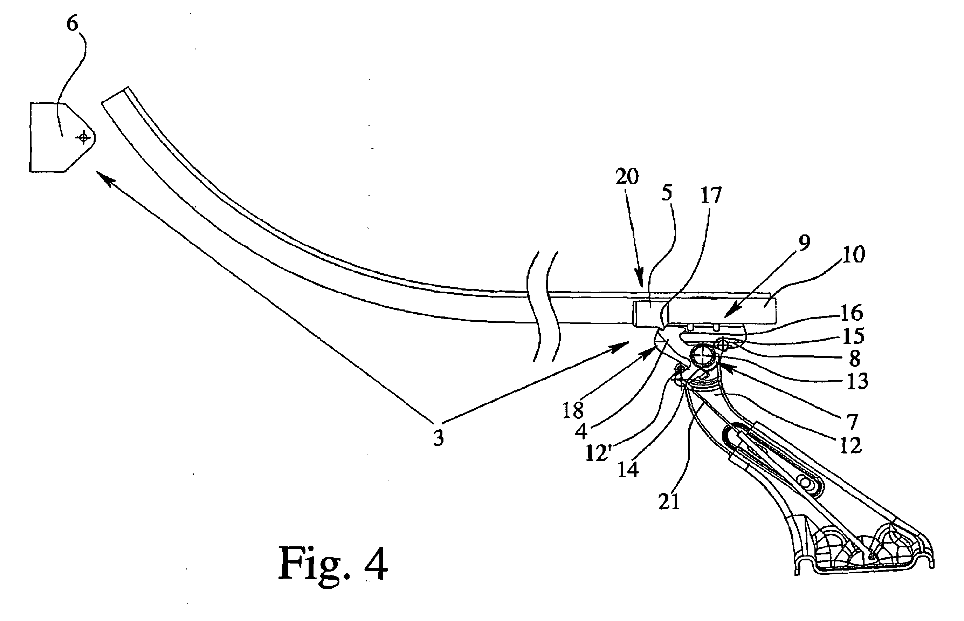

Die Schloßanordnung 2 ist hier mit einer Klinkenanordnung 3 ausgestattet, die eine schwenkbare Klinke 4 aufweist. Die Klinke 4 ist in einen eingefallenen Zustand (Fig. 2, Fig. 4) und in einen ausgehobenen Zustand (Fig. 3) bringbar. Die Klinkenanordnung 3 weist ein erstes Eingriffselement 5 und ein zweites Eingriffselement 6 auf, mit denen die im eingefallenen Zustand befindliche Klinke 4 in Eingriff bringbar ist. Mit "Zustand" ist hier nicht etwa eine eindeutige Stellung der Klinke gemeint. Vielmehr geht es hier um den jeweiligen Funktionszustand. Im eingefallenen Zustand befindet sich die Klinke 4 im Eingriff mit einem der beiden Eingriffselemente 5, 6. Im ausgehobenen Zustand ist die Klinke 4 außer Eingriff, also frei von den Eingriffselementen 5, 6.

Die Klinke 4 ist bei in der geöffneten Stellung stehender Schiebetür 1 (Fig. 4) in Eingriff mit dem ersten Eingriffselement 5 bringbar, wobei die dann im eingefallenen Zustand befindliche Klinke 4 die Schiebetür 1 in der geöffneten Stellung fixiert. Je nach Ausgestaltung kann es vorgesehen sein, daß die Klinke 4 bei der Verstellung der Schiebetür 1 in die geöffnete Stellung automatisch in den eingefallenen Zustand schnappt Es kann aber auch vorteilhaft sein, daß die Klinke 4 bei Erreichen der geöffneten Stellung der Schiebetür 1 gesteuert vom ausgehobenen Zustand in den eingefallenen Zustand überführt wird,

Bei in der geschlossenen Stellung stehender Schiebetür 1 läßt sich die Klinke 4 in Eingriff mit dem zweiten Eingriffselement 6 bringen, wobei die dann im eingefallenen Zustand befindliche Klinke 4 die Schiebetür 1 in der geschlossenen Stellung fixiert. Auch hier ist ein Schnappen der Klinke 4 in den eingefallenen Zustand aber auch ein gesteuerte Führen der Klinke 4 in den eingefallenen Zustand denkbar.

Wesentlich ist nun, daß die Anordnung so getroffen ist, daß die Vorspannung der Klinke 4 in Richtung des eingefallenen Zustandes durch die Verstellung der Schiebetür 1 in die geschlossene Stellung ansteigt. Die Vorspannung der Klinke 4 wirkt in Fig. 2 rechtsherum, so daß diese Vorspannung für einen sicheren Eingriff zwischen der Klinke 4 und dem zweiten Eingriffselement 6 sorgt. Durch eine entsprechende Erhöhung der Vorspannung wird dem ungewünschten Ausheben der Klinke 4, insbesondere im Crashfall, entgegengewirkt.

Der Anstieg der Vorspannung der Klinke 4 durch die Verstellung der Schiebetür 1 in die geschlossene Stellung ist bei dem dargestellten und insoweit bevorzugten Ausführungsbeispiel besonders vorteilhaft, als die Klinke 4 hier ausschließlich durch ihre Vorspannung im eingefallenen Zustand gehalten wird. Es ist also keine zusätzliche Sperrklinke o. dgI. vorhanden, welche die Klinke 4 im eingefallenen Zustand blockiert. Dies ist durch die erhöhte Vorspannung auch nicht notwendig, so daß die Konstruktion insgesamt besonders einfach ist.

Die Vorspannung der Klinke 4 wird vorzugsweise durch eine Federelement 7 erzeugt, das bei der Verstellung der Schiebetür 1 in die geschlossene Stellung gespannt wird. Es ist also ein Federspeicher vorgesehen, der bei der Verstellung der Schiebetür 1 in die geschlossene Stellung geladen wird. Durch das Spannen des Federelements 7 steigt die Vorspannung der Klinke 4 mit der Verstellung der Schiebetür 1 in die geschlossene Stellung.

Um das oben genannte Spannen des Federelements 7 zu ermöglichen, ist das Federelement 7 auf irgendeine Art und Weise mit der Verstellbewegung der Schiebetür 1 zu koppeln. Denkbar wäre hier ein mitlaufendes Rad, das an ein entsprechendes Federelement angeschlossen ist. Eine konstruktiv besonders einfach zu realisierende Variante läßt sich allerdings bei einer Schiebetür 1 mit einem an der Schiebetür 1 angeordneten Rollenwagen 8 erzielen. Der Rollenwagen 8 ist mit einer Laufrollenanordnung 9 ausgestattet, wobei die Schiebetür 1 über die Laufrollenanordnung 9 in einer Führungsschiene 10 geführt ist.

Bei dem in Fig. 1 ausgestellten Ausführungsbeispiel ist eine untere Führungsschiene 10 und eine mittlere Führungsschiene 11 vorgesehen. Hier sind auch anderer Varianten denkbar. Die erfindungsgemäße Lösung wird im folgenden anhand der unteren Führungsschiene 10 erläutert. Dies ist nicht beschränkend zu verstehen, alle Ausführungen gelten gleichermaßen für die Anwendung der vorschlagsgemäßen Lösung auf die mittlere Führungsschiene 11 oder auf eine gegebenenfalls vorhandene obere Führungsschiene.

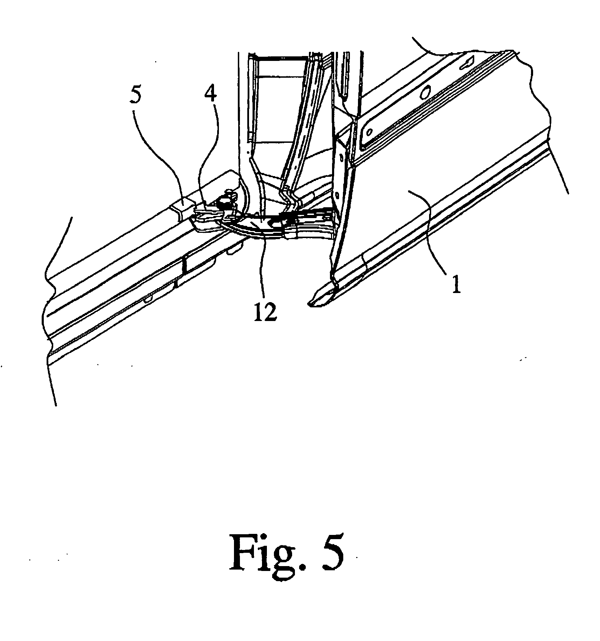

Der Rollenwagen 8 ist an einem Trägerbauteil 12 angeordnet, an dem wiederum die Schiebetür 1 befestigt ist. Dies ist der Darstellung in Fig. 5 zu entnehmen. Der Rollenwagen 8 ist relativ zum Trägerbauteil 12 um eine vertikale Schwenkachse 13 schwenkbar. Dies ist erforderlich, da die Führungsschiene 10 in den Fig. 2 bis 4 von rechts nach links gesehen bogenförmig in das Kraftfahrzeug hinein verläuft. Eine Zusammenschau der Fig. 4 und 2 ergibt, daß die Führungsschiene 10 derart ausgestaltet ist, daß die Verstellung der Schiebetür 1 in die geschlossene Stellung mit einem Verschwenken des Rollenwagens 8 relativ zum Trägerbauteil 12 verbunden ist. Dieses Verschwenken wird bei dem dargestellten und insoweit bevorzugten Ausführungsbeispiel ausgenutzt, um das Federelement 7 durch die Verstellung der Schiebetür 1 in die geschlossene Stellung zu spannen. Hierfür ist die Klinke 4 am Trägerbauteil 12 angeordnet, wobei das Federelement 7 mit der Klinke 4 einerseits und mit dem Rollenwagen 8 andererseits derart gekoppelt ist, daß mit dem Verschwenken des Rollenwagens 8 bei der Verstellung der Schiebetür 1 in die geschlossene Stellung das Spannen des Federelements 7 verbunden ist.

Bei einer besonders einfachen und robusten Ausgestaltung ist das Federelement 7 als Schenkelfeder ausgestaltet, wobei ein Ende 14 der Schenkelfeder 7 an der Klinke 4 und das andere Ende 15 der Schenkelfeder 7 am Rollenwagen 8 festgesetzt ist. In den Fig. 4 und 2 ist ein Anschlag 12' am Trägerbauteil 12 identifiziert, an dem die Klinke 4 mit einem Betätigungsarm einseitig unter Wirkung der Federkraft des Federelements 7 zur Anlage kommt. Beim Verfahren der Schiebetür 1 mit dem daran winkelsteif befestigten Trägerbauteil 12 von der geöffneten Stellung in Fig. 4 in die geschlossene Stellung in Fig. 2 bleibt die räumliche Lage des Anschlags 12' erhalten, während sich die räumliche Lage des Rollenwagens 8 verändert. Während die räumliche Lage des Endes 14 der Schenkelfeder 7 an der Klinke 4 unverändert bleibt, wird das andere Ende 15 der Schenkelfeder 7 am Rollenwagen 8 beim Übergang von Fig. 4 nach Fig. 2 nach unten und damit näher an das erste Ende 14 der Schenkelfeder 7 herangedrückt. Resultat ist die erhöhte Vorspannung des Federelements - Schenkelfeder 7.

Besonders vorteilhaft ist nun die Realisierung des Eingriffs der Klinke 4 mit dem ersten Eingriffselement 5 einerseits und mit dem zweiten Eingriffselement 6 andererseits. Dies ist auch Gegenstand einer weiteren, eigenständigen Lehre.

Wesentlich ist nach der obigen weiteren Lehre, daß die Anordnung so getroffen ist, daß die Klinke 4 bei in der einen Stellung stehender Schiebetür 1 als Hakenklinke und bei in der anderen Stellung stehender Schiebetür 1 als Stützklinke arbeitet. Mit der einen und der anderen Stellung ist hier die geschlossene Stellung einerseits und die geöffnete Stellung andererseits gemeint. Die mit dieser weiteren Lehre verbundenen Vorteile wurden weiter oben erläutert. Es darf darauf hingewiesen werden, daß diese weitere Lehre unabhängig von der ansteigenden Vorspannung der Klinke 4 realisiert werden kann.

Für den Betrieb der Klinke 4 als Hakenklinke weist diese eine hakenartige Ausformung 16 für den Eingriff mit dem ersten Eingriffselement 5 oder dem zweiten Eingriffselement 6, vorzugsweise für den Eingriff mit dem zweiten Eingriffselemente 6, auf. Für den Betrieb als Stützklinke ist die Klinke 4 ferner mit einem Stützabschnitt 17 für den Eingriff mit dem jeweils anderen Eingriffselement, vorzugsweise mit dem ersten Eingriffselement 5, ausgestattet. Der Stützabschnitt 17 ist hier als einfacher, am vorderen Ende der Klinke 4 angeordneter Absatz realisiert. Es läßt sich den Darstellungen gemäß Fig. 2 bis 4 entnehmen, daß die hakenartige Ausformung 16 einerseits und der Stützabschnitt 17 andererseits an einem Arm 18 der Klinke 4 angeordnet sind. Dies ist kompakt und einfach zu fertigen.

Im dargestellten und insoweit bevorzugten Ausführungsbeispiel ist eines der Eingriffselemente 5, 6, hier das zweite Eingriffselement 6, als Schließkloben für den Eingriff mit der hakenartigen Ausformung 16 der Klinke 4 ausgestaltet. Das andere der Eingriffselemente 5, 6, hier das erste Eingriffselement 5, ist als Rastnocken für den Eingriff mit dem Stützabschnitt 17 der Klinke 4 ausgestaltet. Für den Schließkloben einerseits und den Rastnocken andererseits sind verschiedene weitere Alternativen denkbar.

Eine besonders einfache Ausgestaltung des Rastnockens 5 zeigen die Fig. 2 bis 4. Hier ist der Rastnocken 5 an der Führungsschiene 10 angeordnet, wobei der Rastnocken 5 vorzugsweise durch ein auf die Führungsschiene 10 aufgesetztes, mit einer entsprechenden Ausformung 19 versehenes Blech 20 ausgestaltet ist. Das Blech 20 ist auf die Führungsschiene 10 aufgeschweißt, aufgenietet oder anderweit mit der Führungsschiene 10 verbunden. Grundsätzlich kann es auch vorgesehen sein, daß der Rastnocken 5 als Ausformung in der Führungsschiene 10 selbst ausgestaltet ist.

Die oben beschriebene, gebogene Ausführung der Führungsschiene 10 hat eine besondere Bedeutung für die Crashsicherheit der vorschlagsgemäßen Schiebetüranordnung. Hierdurch ist es nämlich möglich, daß die im eingefallenen Zustand befindliche Klinke 4 derart in Eingriff mit dem zweiten Eingriffselement 6 steht, das über die Klinke 4 eine Kraft quer zur Längsrichtung des Kraftfahrzeugs aufgenommen werden kann. Das oben beschriebene Ausreißen der Schiebetür 1 aus der Führungsschiene 10 im Crashfall, insbesondere bei einem Seitenaufprall, wird also durch die Klinke 4 vermieden.

Für die Betätigung der Klinke 4, insbesondere für das Ausheben der Klinke 4 aus dem eingefallenen Zustand heraus, sind eine Reihe von Möglichkeiten denkbar. Im dargestellten und insoweit bevorzugten Ausführungsbeispiel ist hierfür ein flexibles Zugmittel 21 am Trägerbauteil 12 vorgesehen. Das flexible Zugmittel 21 kann beispielsweise als Bowdenzug oder als Seilzug ausgestaltet sein. Das Ausheben der Klinke 4 kann manuell oder motorisch erfolgen.

Hinsichtlich des motorischen Aushebens der Klinke 4 wird auf die europäische Patentanmeldung 05 009 332.7 verwiesen, die auf die Anmelderin zurückgeht. Der gesamte Offenbarungsgehalt dieser europäischen Patentanmeldung wird hiermit zum Gegenstand der vorliegenden Anmeldung gemacht.

Es läßt sich der Darstellung in Fig. 1 entnehmen, daß die vorschlagsgemäße Schloßanordnung 2 eine Hauptschloßanordnung 22, durch die die Schiebetür 1 in der geschlossenen Stellung fixierbar ist, und eine Zusatzschloßanordnung zur Unterstützung der Hauptschloßanordnung 22 aufweist, wobei die oben beschriebene Klinkenanordnung 3 der Zusatzschloßanordnung zugeordnet ist. Die Hauptschloßanordnung 22 ist also so ausgelegt, daß sie den größten Teil der auf die in der geschlossenen Stellung stehenden Schiebetür 1 wirkenden Kräfte aufnimmt. Grundsätzlich kann es aber auch vorgesehen sein, daß die Hauptschloßanordnung 22 und die Zusatzschloßanordnung, hier also die Klinkenanordnung 3, die entsprechenden Kräfte zu gleichen Teilen aufnehmen.

Bei dem dargestellten und insoweit bevorzugten Ausführungsbeispiel ist die Hauptschloßanordnung 22 und die Zusatzschloßanordnung, hier die Klinkenanordnung 3, in Längsrichtung des Kraftfahrzeugs gesehen an gegenüberliegenden Bereichen der Schiebetür 1 angeordnet. Dies führt zu einer Erhöhung der Crashsicherheit, insbesondere bei einem Seitenaufprall.

Für die Realisierung der Hauptschloßanordnung 22 sind eine Reihe von Möglichkeiten denkbar. Eine besonders bevorzugte Ausgestaltung besteht darin, die Hauptschloßanordnung 22 mit den üblichen Schließelementen Schloßfalle und Sperrklinke auszustatten.

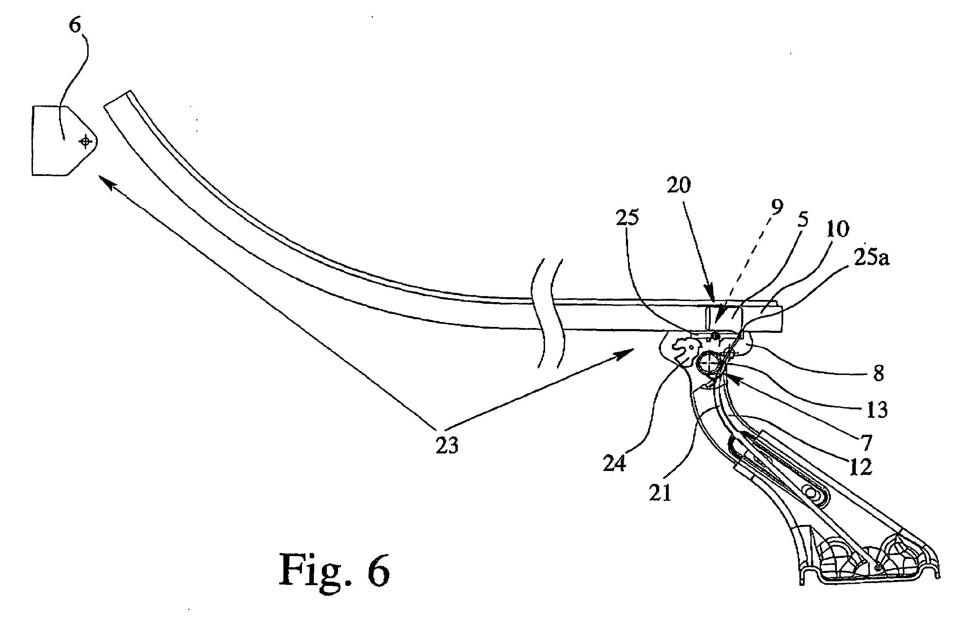

Nach einer weiteren Lehre, der ebenfalls eigenständige Bedeutung zukommt, wird wiederum die Doppelnutzung einer Klinke für die Fixierung der Schiebetür in der geöffneten Stellung einerseits und für die Fixierung der Schiebetür in der geschlossenen Stellung andererseits vorgeschlagen. Diese Ausgestaltung ist in Fig. 6 dargestellt.

Die Schloßanordnung weist hier eine Fallenanordnung 23 auf, wobei die Fallenanordnung 23 hier mit einer schwenkbaren Schloßfalle 24 und einer Sperrklinke 25 ausgestattet ist. Die Schloßfalle 24 ist zwischen einer Offenstellung und einer Raststellung verstellbar und wird von der Sperrklinke 25 in der Raststellung gehalten. Die Fallenanordnung 23 weist ein erstes Eingriffselement 5 und ein zweites Eingriffselement 6 auf, wobei die Schloßfalle 24 bei der Verstellung der Schiebetür 1 in die geschlossene Stellung in Eingriff mit dem zweiten Eingriffselement 6 kommt, dadurch in die Raststellung überführt wird und die Schiebetür 1 in der geschlossenen Stellung fixiert. Die Fallenanordnung 23 entspricht insoweit der für heutige Kraftfahrzeug-Türschlösser üblichen Anordnung.

Wesentlich ist nach dieser weiteren Lehre allerdings, daß die Sperrklinke 25 der Fallenanordnung 23 bei der Verstellung der Schiebetür 1 in die geöffnete Stellung in Eingriff mit dem ersten Eingriffselement 5 kommt und hierdurch die Schiebetür 1 in der geöffneten Stellung fixiert. Die Sperrklinke 25 weist hierfür zusätzlich eine hakenartige Ausformung 25a auf. Die Sperrklinke 25 dient also nicht nur zur Fixierung der Schloßfalle 24 in der Raststellung, sondern eben auch, wie weiter oben erläutert, zur Fixierung der Schiebetür 1 in der geöffneten Stellung. Je nach konstruktiven Randbedingungen kann die Sperrklinke 25 bei in der geöffneten Stellung stehender Schiebetür 1 als Hakenklinke (Fig. 6) oder als Stützklinke (nicht dargestellt) arbeiten. Entsprechendes gilt selbstverständlich für den Eingriff der Sperrklinke 25 mit der Schloßfalle 24.

Grundsätzlich kann die Sperrklinke 25 hier wie weiter oben erläutert mit der Verstellbewegung der Schiebetür 1 gekoppelt sein. Dabei kann, wie ebenfalls oben beschrieben, eine veränderliche Vorspannung der Sperrklinke 25 zu guten Ergebnissen führen. Eine entsprechende Kopplung kann aber auch dazu geeignet sein, die Sperrklinke 25 bei der Verstellung der Schiebetür 1 in die geöffnete Stellung derart zu verstellen, daß sie in den Eingriffsbereich des ersten Eingriffselements 5 kommt, und ansonsten außerhalb diese Eingriffsbereichs liegt.

Besonders vorteilhaft bei dieser Variante der Doppelnutzung einer Klinke ist die Tatsache, daß die Fallenanordnung 23 bestehend aus Schloßfalle 24 und Sperrklinke 25 für die Fixierung der Schiebetür 1 in der geschlossenen Stellung genutzt wird, während für die Fixierung der Schiebetür 1 in der geöffneten Stellung allein die Sperrklinke 25 zur Anwendung kommt. Auch hier ist also erkannt worden, daß die Funktion der Fixierung der Schiebetür 1 in der geöffneten Stellung nicht gleichwertig zu der Funktion der Fixierung der Schiebetür 1 in der geschlossenen Stellung ist. Dies wurde weiter oben bereits erläutert.

Auch die beschriebene Fallenanordnung 23 kann, gegebenenfalls als Zusatzschloßanordnung, zusammen mit einer oben beschriebenen Hauptschloßanordnung Anwendung finden. Alle obigen Ausführungen zum Zusammenspiel einer Hauptschloßanordnung mit einer Zusatzschloßanordnung gelten gleichermaßen für die Fallenanordnung gemäß der weiteren, eigenständigen Lehre.

Bei allen oben beschriebenen Schiebetüranordnungen ist es vorzugsweise so, daß die Eingriffselemente an der Karosserie des Kraftfahrzeugs angeordnet sind, und daß die mit den Eingriffselementen in Eingriff bringbaren Elemente, beispielsweise die Klinke, an der Schiebetür angeordnet sind. Dies kann aber auch anders herum vorgesehen sein. Dann sind die Eingriffselemente an der Schiebetür angeordnet und kommen mit entsprechenden Komponenten an der Karosserie in Eingriff.

Schließlich darf noch darauf hingewiesen werden, daß alle oben beschriebenen Schloßanordnungen auch als solche handelsfähig sind und entsprechend beansprucht werden. Hinsichtlich der Ausgestaltung der Schloßanordnung darf auf die obigen Ausführungen verwiesen werden.

## Patentansprüche

1. Schiebetüranordnung für ein Kraftfahrzeug mit einer Schiebetür (1), die durch eine Schiebebewegung in eine geöffnete und in eine geschlossene Stellung verstellbar ist,
wobei eine Schloßanordnung (2) zur Fixierung der Schiebetür (1) jedenfalls in der geöffneten und in der geschlossenen Stellung vorgesehen ist,
wobei die Schloßanordnung (2) eine Klinkenanordnung (3) aufweist,
wobei die Klinkenanordnung (3) eine schwenkbare Klinke (4) aufweist, die in einen eingefallene Zustand und in einen ausgehobenen Zustand bringbar und in den eingefallenen Zustand vorgespannt ist,
wobei die Klinkenanordnung (3) ein erstes Eingriffselement (5) und ein zweites Eingriffselement (6) aufweist, mit denen die im eingefallenen Zustand befundliche Klinke (4) in Eingriff bringbar ist,
wobei die Klinke (4) bei in der geöffneten Stellung stehender Schiebetür (1) in Eingriff mit dem ersten Eingriffselement (5) bringbar ist und wobei die dann im eingefallenen Zustand befindliche Klinke (4) die Schiebetür (1) in der geöffneten Stellung fixiert, und
wobei die Klinke (4) bei in der geschlossenen Stellung stehender Schiebetür (1) in Eingriff mit dem zweiten Eingriffselement (6) bringbar ist und die dann im eingefallenen Zustand befindliche Klinke (4) die Schiebetür (1) in der geschlossenen Stellung fixiert,
**dadurch gekennzeichnet,**
**daß** die Anordnung so getroffen ist, daß die Vorspannung der Klinke (4) in Richtung des eingefallenen Zustandes durch die Verstellung der Schiebetür (1) in die geschlossene Stellung ansteigt.

2. Schiebetüranordnung nach Anspruch 1, **dadurch gekennzeichnet,**
**daß** die Klinke (4) ausschließlich durch ihre Vorspannung im eingefallenen Zustand gehalten wird.

3. Schiebetüranordnung nach Anspruch 1 oder 2, **dadurch gekennzeichnet,**
**daß** ein Federelement (7) vorgesehen ist, das die Vorspannung der Klinke (4) erzeugt und das bei der Verstellung der Schiebetür (1) in die geschlossene Stellung gespannt wird, wodurch mit der Verstellung der Schiebetür (1) in die geschlossene Stellung die Vorspannung der Klinke (4) in den eingefallenen Zustand ansteigt.

4. Schiebetüranordnung nach einem der vorhergehenden Ansprüche, **dadurch gekennzeichnet,**
**daß** ein an der Schiebetür (1) angeordneter Rollenwagen (8) mit einer Laufrollenanordnung (9) vorgesehen ist und daß die Schiebetür (1) über die Laufrollenanordnung (9) in einer Führungsschiene (10) an der Karosserie des Kraftfahrzeugs geführt ist, vorzugsweise, daß der Rollenwagen (8) an einem Trägerbauteil (12) angeordnet ist und relativ zum Trägerbauteil (12) um eine vertikale Schwenkachse (13) schwenkbbar ist und daß die Führungsschiene (10) derart ausgestaltet ist, daß die Verstellung der Schiebetür (1) in die geschlossene Stellung mit einem Verschwenken des Rollenwagens (8) relativ zum Trägerbauteil (12) verbunden ist, weiter vorzugsweise, daß die Klinke (4) am Trägerbauteil (12) angeordnet ist und daß das Federelement (7) mit der Klinke (4) einerseits und mit dem Rollenwagen (8) andererseits derart gekoppelt ist, daß mit dem Verschwenken des Rollenwagens (8) bei der Verstellung der Schiebetür (1) in die geschlossene Stellung das Spannen des Federelements (7) verbunden ist.

5. Schiebetüranordnung nach Anspruch 4, **dadurch gekennzeichnet,**
**daß** das Federelement (7) als Schenkelfeder ausgestaltet ist und daß ein Ende (14) der Schenkelfeder (7) an der Klinke (4) und das andere Ende (15) der Schenkelfeder (7) am Rollenwagen (8) festgesetzt ist.

6. Schiebetüranordnung nach einem der vorhergehenden Ansprüche, **dadurch gekennzeichnet,**
**daß** die Anordnung so getroffen ist, daß die Klinke (4) bei in der geschlossenen Stellung stehender Schiebetür (1) als Hakenklinke oder als Stützklinke arbeitet und bei in der geöffneten Stellung stehender Schiebetür umgekehrt als Stützklinke oder als Hakenklinke arbeitet.

7. Schiebetüranordnung nach Anspruch 6, **dadurch gekennzeichnet,**
**daß** die Klinke (4) eine hakenartige Ausformung (16) für den Eingriff mit dem ersten Eingriffselement (5) oder dem zweiten Eingriffselement (6) aufweist und daß die Klinke (4) einen Stützabschnitt (17) für den Eingriff mit dem jeweils anderen Eingriffselement (6, 5) aufweist, vorzugsweise, daß die hakenartige Ausformung (16) und der Stützabschnitt (17) an einem Arm (18) der Klinke (4) angeordnet sind.

8. Schiebetüranordnung nach Anspruch 8, **dadurch gekennzeichnet,**
**daß** eines der Eingriffselemente (5, 6) als Schließkloben o. dgl. für den Eingriff mit der hakenartigen Ausformung (16) der Klinke (4) und das andere der Eingriffselemente (6, 5) als Rastnocken o. dgl. für den Eingriff mit dem Stützabschnitt (17) der Klinke (4) ausgestaltet ist, vorzugsweise, daß der Rastnocken an der Führungsschiene (10) angeordnet ist, weiter vorzugsweise, daß der Rastnokken durch ein auf die Führungsschiene (10) aufgesetztes, insbesondere aufgeschweißtes, mit einer entsprechenden Ausformung versehenes Blech (20) ausgestaltet ist oder, daß der Rastnocken als Ausformung in der Führungsschiene (10) ausgestaltet ist.

9. Schiebetüranordnung nach einem der vorhergehenden Ansprüche, **dadurch gekennzeichnet,**
**daß** ein flexibles Zugmittel (21), vorzugsweise ein Bowdenzug oder ein Seilzug, zum manuellen oder motorischen Ausheben der Klinke (4) aus dem eingefallenen Zustand vorgesehen ist.

10. Schiebetüranordnung nach einem der vorhergehenden Ansprüche, **dadurch gekennzeichnet,**
**daß** die Schloßanordnung (2) eine Hauptschloßanordnung (22), durch die die Schiebetür (1) in der geschlossenen Stellung fixierbar ist, und eine Zusatzschloßanordnung zur Unterstützung der Hauptschloßanordnung (22) aufweist und daß die Klinkenanordnung (3) der Zusatzschloßanordnung zugeordnet ist, vorzugsweise, daß die Hauptschloßanordnung (22) und die Zusatzschloßanordnung in Längsrichtung des Kraftfahrzeugs gesehen an gegenüberliegenden Bereichen der Schiebetür (1) angeordnet sind, weiter vorzugsweise, daß die Hauptschloßanordnung (22) eine Schloßfalle und eine der Schloßfalle zugeordnete Sperrklinke aufweist.

11. Schiebetüranordnung nach einem der vorhergehenden Ansprüche, **dadurch gekennzeichnet, daß** die Eingriffselemente (5, 6) an der Karosserie des Kraftfahrzeugs angeordnet sind, oder, daß die Eingriffselemente (5, 6) an der Schiebetür (1) angeordnet sind.

12. Schloßanordnung für eine Schiebetüranordnung nach dem Oberbegriff von Anspruch 1,
wobei die Schloßanordnung (2) eine Klinkenanordnung (3) aufweist,
wobei die Klinkenanordnung (3) eine schwenkbare Klinke (4) aufweist, die in einen eingefallenen Zustand und in einen ausgehobenen Zustand bringbar und in den eingefallenen Zustand vorgespannt ist,
wobei die Klinkenanordnung (3) ein erstes Eingriffselement (5) und ein zweites Eingriffselement (6) aufweist, mit denen die im eingefallenen Zustand befindliche Klinke (4) in Eingriff bringbar ist,
wobei die Klinke (4) bei in der geöffneten Stellung stehender Schiebetür (1) in Eingriff mit dem ersten Eingriffselement (5) bringbar ist und wobei die dann im eingefallenen Zustand befindliche Klinke (4) die Schiebetür (1) in der geöffneten Stellung fixiert, und
wobei die Klinke (4) bei in der geschlossenen Stellung stehender Schiebetür (1) in Eingriff mit dem zweiten Eingriffselement (6) bringbar ist und die dann im eingefallenen Zustand befindliche Klinke (4) die Schiebetür (1) in der geschlossenen Stellung fixiert,
**gekennzeichnet durch**,
die Merkmale des kennzeichnenden Teils eines oder mehrerer der Ansprüche 1 bis 11.

## Claims

1. Sliding door arrangement for a motor vehicle comprising a sliding door (1) which may be adjusted by a sliding movement into an open position and into a closed position, a lock arrangement (2) being provided for fixing the sliding door (1) in any case in the open position and in the closed position, the lock arrangement (2) comprising a pawl arrangement (3), the pawl arrangement (3) comprising a pivotable pawl (4) which may be brought into an engaged state and into a disengaged state and is pretensioned in the engaged state, the pawl arrangement (3) comprising a first engagement element (5) and a second engagement element (6) with which the pawl (4), which is in the engaged state, may be brought into engagement, the pawl (4) being able to be brought into engagement with the first engagement element (5) when the sliding door (1) is in the open position and the pawl (4), which is then in the engaged state, fixing the sliding door (1) in the open position and the pawl (4) being able to be brought into engagement with the second engagement element (6) when the sliding door (1) is in the closed position and the pawl (4), which is then in the engaged state, fixing the sliding door (1) in the closed position, **characterized in that** the arrangement is such that the pretensioning of the pawl (4) in the direction of the engaged state increases by the adjustment of the sliding door (1) into the closed position.

2. Sliding door arrangement according to Claim 1, **characterized in that** the pawl (4) is held in the engaged state solely by its pretensioning.

3. Sliding door arrangement according to Claim 1 or 2, **characterized in that** a spring element (7) is provided which produces the pretensioning of the pawl (4) and which is tensioned during the adjustment of the sliding door (1) into the closed position, whereby the pretensioning of the pawl (4) in the engaged state increases by the adjustment of the sliding door (1) into the closed position.

4. Sliding door arrangement according to one of the preceding claims, **characterized in that** a roller carriage (8) arranged on the sliding door (1) is provided with a roller arrangement (9) and **in that** the sliding door (1) is guided via the roller arrangement (9) in a guide rail (10) on the bodywork of the motor vehicle, preferably **in that** the roller carriage (8) is arranged on a carrier component (12) and may be pivoted relative to the carrier component (12) about a vertical pivot axis (13) and **in that** the guide rail (10) is designed such that the adjustment of the sliding door (1) into the closed position is associated with a pivoting of the roller carriage (8) relative to the carrier component (12), further preferably **in that** the pawl (4) is arranged on the carrier component (12), and **in that** the spring element (7) is coupled with the pawl (4), on the one hand, and with the roller carriage (8), on the other hand, such that when adjusting the sliding door (1) into the closed position the tensioning of the spring element (7) is associated with the pivoting of the roller carriage (8).

5. Sliding door arrangement according to Claim 4, **characterized in that** the spring element (7) is designed as a leg spring and **in that** one end (14) of the leg spring (7) is secured to the pawl (4) and the other end (15) of the leg spring (7) is secured to the roller carriage (8).

6. Sliding door arrangement according to one of the preceding claims, **characterized in that** the arrangement is such that when the sliding door (1) is in the closed position, the pawl (4) operates as a hook pawl or as a supporting pawl, and when the sliding door is in the open position, the pawl operates conversely as a supporting pawl or as a hook pawl.

7. Sliding door arrangement according to Claim 6, **characterized in that** the pawl (4) comprises a hook-like shaped element (16) for engagement with the first engagement element (5) or the second engagement element (6) and **in that** the pawl (4) comprises a support portion (17) for engagement with the respective other engagement element (6, 5), preferably **in that** the hook-like shaped element (16) and the support portion (17) are arranged on an arm (18) of the pawl (4).

8. Sliding door arrangement according to Claim 8, **characterized in that** one of the engagement elements (5, 6) is designed as a closing block or the like for engagement with the hook-like shaped element (16) of the pawl (4) and the other of the engagement elements (6, 5) is designed as a latching cam or the like for engagement with the support portion (17) of the pawl (4), preferably **in that** the latching cam is arranged on the guide rail (10), further preferably **in that** the latching cam is formed by a metal plate (20) positioned, in particular welded, on the guide rail (10), provided with a corresponding shaped element, or in that the latching cam is designed as a shaped element in the guide rail (10).

9. Sliding door arrangement according to one of the preceding claims, **characterized in that** a flexible tractive means (21), preferably a Bowden cable or cable control is provided for disengaging the pawl (4) from the engaged state, either manually or in a motorized manner.

10. Sliding door arrangement according to one of the preceding claims, **characterized in that** the lock arrangement (2) comprises a main lock arrangement (22), by which the sliding door (1) may be fixed in the closed position, and an auxiliary lock arrangement for assisting the main lock arrangement (22) and **in that** the pawl arrangement (3) is associated with the auxiliary lock arrangement, preferably **in that** the main lock arrangement (22) and the auxiliary lock arrangement are arranged, viewed in the longitudinal direction of the motor vehicle, on opposing regions of the sliding door (1), further preferably **in that** the main lock arrangement (22) comprises a latch bolt and a locking pawl associated with the latch bolt.

11. Sliding door arrangement according to one of the preceding claims, **characterized in that** the engagement elements (5, 6) are arranged on the bodywork of the motor vehicle or **in that** the engagement elements (5, 6) are arranged on the sliding door (1).

12. Lock arrangement for a sliding door arrangement according to the preamble of Claim 1, the lock arrangement (2) comprising a pawl arrangement (3), the pawl arrangement (3) comprising a pivotable pawl (4) which may be brought into an engaged state and into a disengaged state and is pretensioned in the engaged state, the pawl arrangement (3) comprising a first engagement element (5) and a second engagement element (6) with which the pawl (4), which is in the engaged state, may be brought into engagement, the pawl (4) being able to be brought into engagement with the first engagement element (5) when the sliding door (1) is in the open position and the pawl (4), which is then in the engaged state, fixing the sliding door (1) in the open position and the pawl (4) being able to be brought into engagement with the second engagement element (6) when the sliding door (1) is in the closed position and the pawl (4), which is then in the engaged state, fixing the sliding door (1) in the closed position, **characterized by** the features of the characterizing part of one or more of Claims 1 to 11.

## Revendications

1. Agencement de porte coulissante pour un véhicule automobile, comprenant une porte coulissante (1), qui peut être déplacée par un mouvement de coulissement dans une position ouverte et dans une position fermée,
un agencement de serrure (2) étant prévu pour la fixation de la porte coulissante (1) dans chaque cas dans la position ouverte et dans la position fermée,
l'agencement de serrure (2) présentant un agencement de cliquet (3),
l'agencement de cliquet (3) présentant un cliquet pivotant (4) qui peut être amené dans un état enclenché et dans un état soulevé et qui est précontraint dans l'état enclenché,
l'agencement de cliquet (3) présentant un premier élément d'engagement (5) et un deuxième élément d'engagement (6) avec lesquels le cliquet (4) se trouvant dans l'état enclenché peut être amené en prise,
le cliquet (4), lorsque la porte coulissante (1) est dans la position ouverte, pouvant être amené en prise avec le premier élément d'engagement (5) et le cliquet (4) se trouvant alors dans l'état enclenché fixant la porte coulissante (1) dans la position fermée,
**caractérisé en ce que**
l'agencement est tel que la précontrainte du cliquet (4) dans la direction de l'état enclenché augmente sous l'effet du déplacement de la porte coulissante (1) dans la position fermée.

2. Agencement de porte coulissante selon la revendication 1, **caractérisé en ce que** le cliquet (4) est maintenu dans l'état enclenché exclusivement sous l'effet de sa précontrainte.

3. Agencement de porte coulissante selon la revendication 1 ou 2, **caractérisé en ce que** l'on prévoit un élément de ressort (7) qui produit la précontrainte du cliquet (4) et qui est tendu lors du déplacement de la porte coulissante (1) dans la position fermée, de sorte qu'avec le déplacement de la porte coulissante (1) dans la position fermée, la précontrainte du cliquet (4) dans l'état enclenché augmente.

4. Agencement de porte coulissante selon l'une quelconque des revendications précédentes, **caractérisé en ce**
**qu'**un chariot à galets (8) disposé sur la porte coulissante (1) est prévu avec un agencement de galets de roulement (9) et en ce que la porte coulissante (1) est guidée sur l'agencement de galets de roulement (9) dans un rail de guidage (10) sur la carrosserie du véhicule automobile, de préférence en ce que le chariot à galets (8) est disposé sur un composant porteur (12) et peut être pivoté par rapport au composant porteur (12) autour d'un axe de pivotement vertical (13) et en ce que le rail de guidage (10) est configuré de telle sorte que le déplacement de la porte coulissante (1) dans la position fermée soit associé à un pivotement du chariot à galets (8) par rapport au composant porteur (12), et en outre de préférence, en ce que le cliquet (4) est disposé sur le composant porteur (12) et en ce que l'élément de ressort (7) est accouplé d'une part au cliquet (4) et au chariot à galets (8) d'autre part, de telle sorte que le tensionnement de l'élément de ressort (7) soit associé au pivotement du chariot à galet (8), lors du déplacement de la porte coulissante (1) dans la position fermée.

5. Agencement de porte coulissante selon la revendication 4, **caractérisé en ce que**
l'élément de ressort (7) est réalisé sous forme de ressort à branches et **en ce qu'**une extrémité (14) du ressort à branches (7) est fixée au cliquet (4) et l'autre extrémité (15) du ressort à branches (7) est fixée au chariot à galets (8).

6. Agencement de porte coulissante selon l'une quelconque des revendications précédentes, **caractérisé en ce que**
l'agencement est tel que le cliquet (4), lorsque la porte coulissante (1) est dans la position fermée, fonctionne comme un cliquet d'accrochage ou comme un cliquet de support et, lorsque la porte coulissante est dans la position ouverte, fonctionne à l'inverse comme un cliquet de support ou un cliquet d'accrochage.

7. Agencement de porte coulissante selon la revendication 6, **caractérisé en ce que**
le cliquet (4) présente une formation de type crochet (16) pour l'engagement avec le premier élément d'engagement (5) ou le deuxième élément d'engagement (6) et **en ce que** le cliquet (4) présente une portion de support (17) pour l'engagement avec l'autre élément d'engagement respectif (6, 5), de préférence **en ce que** la formation de type crochet (16) et la portion de support (17) sont disposées sur un bras (18) du cliquet (4).

8. Agencement de porte coulissante selon la revendication 8, **caractérisé en ce que** l'un des éléments d'engagement (5, 6) est réalisé sous forme de plot de fermeture ou similaire pour l'engagement avec la formation de type crochet (16) du cliquet (4) et l'autre des éléments d'engagement (6, 5) est réalisé sous forme de came d'encliquetage ou similaire pour l'engagement avec la portion de support (17) du cliquet (4), de préférence **en ce que** la came d'encliquetage est disposée sur le rail de guidage (10), et de préférence **en ce que** la came d'encliquetage est réalisée par une tôle (20) posée sur le rail de guidage (10), notamment par soudage, et pourvue d'une formation correspondante, ou **en ce que** la came d'encliquetage est réalisée sous forme de formation dans le rail de guidage (10).

9. Agencement de porte coulissante selon l'une quelconque des revendications précédentes,
**caractérisé en ce que**
l'on prévoit un moyen de traction flexible (21), de préférence un câble Bowden ou un câble de traction, pour le soulèvement manuel ou motorisé du cliquet (4) hors de l'état enclenché.

10. Agencement de porte coulissante selon l'une quelconque des revendications précédentes,
**caractérisé en ce que**
l'agencement de serrure (2) présente un agencement de serrure principal (22), par lequel la porte coulissante (1) peut être fixée dans la position fermée, et un agencement de serrure supplémentaire pour supporter l'agencement de serrure principal (22), et **en ce que** l'agencement de cliquet (3) est associé à l'agencement de serrure supplémentaire, de préférence **en ce que** l'agencement de serrure principal (22) et l'agencement de serrure supplémentaire sont disposés, vus dans la direction longitudinale du véhicule automobile, dans des régions opposées de la porte coulissante (1), et de préférence en outre, **en ce que** l'agencement de serrure principale (22) présente un pêne de serrure et un cliquet d'arrêt associé au pêne de serrure.

11. Agencement de porte coulissante selon l'une quelconque des revendications précédentes, **caractérisé en ce que** les éléments d'engagement (5, 6) sont disposés sur la carrosserie du véhicule automobile, ou **en ce que** les éléments d'engagement (5, 6) sont disposés sur la porte coulissante (1).

12. Agencement de serrure pour un agencement de porte coulissante selon le préambule de la revendication 1, dans lequel l'agencement de serrure (2) présente un agencement de cliquet (3),
l'agencement de cliquet (3) présentant un cliquet pivotant (4) qui peut être amené dans un état enclenché et dans un état soulevé et qui est précontraint dans l'état enclenché,
l'agencement de cliquet (3) présentant un premier élément d'engagement (5) et un deuxième élément d'engagement (6) avec lesquels le cliquet (4) se trouvant dans l'état enclenché peut être amené en prise,
le cliquet (4), lorsque la porte coulissante (1) se trouve dans la position ouverte, pouvant être amené en prise avec le premier élément d'engagement (5) et le cliquet (4) se trouvant alors dans l'état enclenché fixant la porte coulissante (1) dans la position ouverte, et
le cliquet (4), lorsque la porte coulissante (1) est dans la position fermée, pouvant être amené en prise avec le deuxième élément d'engagement (6) et le cliquet (4) se trouvant alors dans l'état enclenché fixant la porte coulissante (1) dans la position fermée,
**caractérisé par** les caractéristiques de la partie caractérisante d'une ou de plusieurs des revendications 1 à 11.
